(19) **Europäisches Patentamt European Patent Office Office européen des brevets**

(11) **EP 2 629 052 B1**

(12) **FASCICULE DE BREVET EUROPEEN**

(45) Date de publication et mention
de la délivrance du brevet:
**28.12.2016 Bulletin 2016/52**

(51) Int Cl.:
***G01C 5/00*** *(2006.01)*    ***G05D 1/06*** *(2006.01)*

(21) Numéro de dépôt: **13153981.9**

(22) Date de dépôt: **05.02.2013**

(54) **Détection d'anomalie de descente d'un aéronef**

Erkennung von Anomalien beim Sinkflug eines Luftfahrzeugs

Detection of a descent abnormality of an aircraft

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.02.2012 FR 1251399**

(43) Date de publication de la demande:
**21.08.2013 Bulletin 2013/34**

(73) Titulaires:
• **Airbus Operations
31060 Toulouse (FR)**
• **Airbus
31700 Blagnac (FR)**

(72) Inventeurs:
• **Caule, Nicolas
31100 Toulouse (FR)**
• **Rosay, Jacques
31000 Toulouse (FR)**
• **Rouquette, Patrice
31450 Pompertuzat (FR)**
• **Cortet, Emmanuel
31700 Daux (FR)**
• **Melin, François
86240 Iteuil (FR)**
• **Louise, Pascale
31100 Toulouse (FR)**
• **Devineau, Sylvain
31000 Toulouse (FR)**

(74) Mandataire: **Santarelli
49, avenue des Champs-Elysées
75008 Paris (FR)**

(56) Documents cités:
**FR-A1- 2 416 837**

EP 2 629 052 B1

**Description**

La présente invention concerne la détection d'anomalie de descente d'un aéronef.

Des systèmes d'alerte de risque de collision en cas d'approche dangereuse du sol par l'aéronef existent.

Par exemple, il s'agit des systèmes :

- TAWS (sigle de « Terrain Awareness and Warning System » en anglais, c'est-à-dire « système d'alerte et de prise de conscience du terrain » en français),

- EGPWS (sigle de « Enhanced Ground Proximity Warning System » en anglais, soit « système amélioré d'alerte de proximité du sol » en français), ou encore

- GCAS (sigle de « Ground Collision Avoidance System » en anglais, ou « système d'évitement de collision avec le sol » en français).

Ces systèmes génèrent des alertes (sonores et/ou visuelles) à destination de l'équipage de l'aéronef, à partir d'algorithmes d'alerte de collision pouvant être « réactifs » ou « prédictifs ».

Dans le premier type d'algorithme, les alertes sont déclenchées principalement en fonction d'informations fournies par des chaînes de mesure dans l'aéronef, par exemple en fonction d'informations fournies par un radioaltimètre. Dans le deuxième type d'algorithme, le déclenchement de l'alerte repose sur des informations contenues dans une ou plusieurs bases de données (par exemple de type terrain, obstacle, piste d'aéroports, ou autre) et sur les moyens de positionnement géographique de l'aéronef (par exemple des moyens GPS, sigle de « Global Positioning System » en anglais).

Lors du déclenchement d'une alerte de risque de collision avec le terrain survolé, l'équipage doit, dans un temps très bref, analyser la situation, prendre une décision et agir pour redresser le nez de l'aéronef, corriger sa vitesse verticale et éventuellement remettre les ailes à plat ou corriger la trajectoire avion.

Dans des situations d'urgence, l'équipage peut ne pas tenir compte de l'alerte à cause d'une désorientation spatiale qui peut l'amener à persévérer dans une action erronée mettant en danger la situation de l'aéronef.

Le document FR 2 416 837 divulgue un dispositif d'avertissement de vitesse de descente excessive pour un aéronef dans lequel des enveloppes d'avertissement vitesse verticale-altitude sont décalées lorsque l'aéronef s'approche du sol avec une vitesse inférieure à un seuil prédéterminé.

Pour répondre au problème ci-dessus, le document FR 2 956 512 divulgue un procédé de protection automatique d'un aéronef, permettant d'éviter que l'aéronef se retrouve dans une position de vol dangereuse.

Ainsi, la vitesse verticale et l'altitude de l'aéronef sont surveillées et en cas de taux de descente excessif pour une altitude donnée, des ordres de protection pour commander des surfaces de commande de l'aéronef sont appliquées afin de rétablir une situation moins dangereuse.

La présente invention s'inscrit dans le cadre de la solution apportée dans le document précité.

Ainsi, un **premier aspect de l'invention** concerne un procédé selon la revendication 1.

Une phase de vol peut se caractériser par rapport à la dangerosité pour l'aéronef, par exemple une vitesse verticale trop élevée pour une altitude trop basse ou encore une manette de poussée des gaz maintenue dans une position commandant une poussée maximale alors que l'avion est en phase d'approche du sol ou autre.

Une descente de l'aéronef peut se définir comme une approche du sol, de la mer ou d'un plan d'eau.

Une anomalie de descente peut s'entendre comme une approche (du sol, de la mer ou autre) qui ne s'apparente pas à un atterrissage.

Le procédé permet de détecter des anomalies de descente de manière précise afin notamment de pouvoir prendre assez tôt des contremesures efficaces.

L'utilisation d'une enveloppe de vol interdite, choisie en fonction des circonstances de vol de l'aéronef (ou phase de vol) permet une telle détection précise.

Par exemple, la caractérisation de la phase de vol de l'aéronef comporte :

- la détection d'une position d'une manette de commande de poussée de l'aéronef,
- la détermination de la variation d'un paramètre de poussée de l'aéronef,
- la comparaison de la vitesse courante de l'aéronef à un seuil minimal de commande de vitesse, et/ou
- la détection d'une absence de piste d'atterrissage à proximité de l'aéronef.

Ces « conditions » permettent une détection pertinente.

Par exemple, la détection de l'anomalie d'approche du sol ou de la mer par l'aéronef est conditionnée par une autorisation de diminution d'altitude de l'aéronef par rapport au sol ou à la mer.

Une telle autorisation permet d'introduire une certaine souplesse dans la détection. Par exemple il peut s'agir de laisser le temps et l'opportunité à l'équipage de réagir avant de déclencher une détection d'anomalie.

L'enveloppe de vol interdite déterminée peut par exemple correspondre à une enveloppe dont la surface dans le plan vitesse verticale - altitude de l'aéronef est plus large que celle d'une enveloppe de vol interdite nominale.

Ainsi, le procédé de détection peut venir en complément de procédés de détection de collision déjà installés sur les aéronefs. Un tel complément peut permettre de renforcer la sécurité et d'introduire des paliers de détection de de prise de mesures de protection de l'aéronef.

Le procédé peut en outre comporter, si une anomalie est détectée, une étape de génération d'un ordre de protection de l'aéronef, pour répondre à l'anomalie détectée.

Ainsi, il est possible de réagir automatiquement à l'anomalie détectée.

Le procédé peut en outre comporter une étape d'application de l'ordre de protection généré.

L'ordre généré peut ne pas être appliqué systématiquement. Cela peut permettre de laisser le temps à l'équipage de réagir lui-même ou encore d'opérer une sélection de l'ordre le plus pertinent si plusieurs systèmes de protection de l'aéronef coexistent.

L'ordre de protection s'applique par exemple sur des surfaces de commande de l'aéronef.

Ces surface de commande sont par exemple les ailes, les ailerons de l'appareil ou toute autre surface pouvant freiner voire stopper la descente de l'appareil.

Le procédé peut en outre comporter une étape de décision d'application de l'ordre de protection généré.

Cette étape de décision peut comporter la sélection de l'ordre à appliquer évoquée ci-avant.

Par exemple, l'étape de décision comporte la sélection d'un ordre parmi au moins l'ordre de protection généré et un ordre de pilotage émanant d'un organe de pilotage de l'aéronef.

Le procédé peut en outre comporter une étape d'inhibition d'application de l'ordre généré en fonction de la phase de vol de l'aéronef déterminée.

Cette inhibition peut par exemple être mise en oeuvre en cas de pannes de matériels qui peuvent amener à avoir mal évalué la phase de vol de l'aéronef.

Un **deuxième aspect de l'invention** concerne un système selon la revendication 10.

Un **troisième aspect de l'invention** concerne un aéronef comportant un système selon le deuxième aspect, par exemple un avion.

Un **quatrième aspect de l'invention** concerne un programme d'ordinateur ainsi qu'un produit programme d'ordinateur et un support de stockage pour de tels programmes et produit, permettant la mise en oeuvre d'un procédé selon le premier aspect lorsque le programme est chargé et exécuté par un processeur d'un système de détection d'anomalie d'approche du sol ou de la mer par un aéronef.

Les objets selon les deuxième, troisième et quatrième aspects de l'invention procurent au moins les mêmes avantages que ceux procurés par le procédé selon le premier aspect. Les objets selon les deuxième et troisième aspects peuvent comporter des éléments configurés pour mettre en oeuvre des étapes correspondant à des caractéristiques optionnelles du procédé selon le premier aspect.

D'autres caractéristiques et avantages de l'invention apparaîtront à la lecture de la présente description détaillée qui suit, à titre d'exemple non limitatif, et des figures annexées parmi lesquelles :

- les **figures 1A et 1B** illustrent des enveloppes de vol interdites;

- les **figures 2 à 7** illustrent des conditions d'armement du mode GCoP ;

- la **figure 8** illustre un profil d'autorisation de perte d'altitude;

- la **figure 9** illustre des profils de descente pour générer des ordres de protection ;

- la **figure 10** illustre le principe de décision d'application des ordres de protection générés ;

- la **figure 11** est un organigramme d'étapes d'un procédé selon un mode de réalisation; et

- la **figure 12** illustre schématiquement un système selon un mode de réalisation.

Dans la description qui suit, il est fait référence à un premier mode de protection automatique d'aéronef contre un risque de collision avec le sol ou la mer appelé GCoP (sigle de « Ground Collision Protection », c'est-à-dire « Protection contre une collision avec le sol » en français).

Il est également fait référence à un deuxième mode de protection appelé UPE (sigle de « Ultimate Protected Envelope », c'est-à-dire « Enveloppe de Protection Ultime » en français).

Par exemple, le mode de protection UPE est le mode de fonctionnement par défaut. Il s'applique lorsque le mode GCoP n'est pas actif.

Dans la suite il n'est fait référence qu'à une descente vers le sol ou une altitude par rapport au sol. Toutefois, la présente invention peut s'appliquer pour détecter une approche anormale de la mer ou d'un plan d'eau si l'aéronef survole de telles étendues d'eau.

Dans le mode de protection UPE, une enveloppe de vol interdite nominale est utilisée. Elle définit des couples vitesse verticale - altitude traduisant un taux de descente excessif et non autorisé pour l'aéronef (en général une vitesse verticale vers le sol ou la mer élevée pour une altitude basse). Il est considéré que lorsque le couple vitesse verticale courante - altitude courante de l'aéronef entre dans cette enveloppe, un risque de collision avec le sol ou la mer est probable, à moins d'une action corrective immédiate à forte autorité.

L'enveloppe de vol interdite peut être déterminée à partir des caractéristiques techniques de l'aéronef et de sa structure.

Lorsque l'aéronef se retrouve dans l'enveloppe de vol interdite, des ordres de protection peuvent être générés. Ces ordres visent notamment à commander des surfaces de commande de l'aéronef qui agissent sur sa vitesse verticale. Ces ordres de protection peuvent être tels que, lorsqu'ils sont appliqués à ces surfaces de commande, l'aéronef ressort de l'enveloppe de vol interdite.

Dans le mode UPE, le taux de descente excessif de l'aéronef peut être réduit tout en maintenant la possibilité pour l'équipage de manoeuvrer l'aéronef (par exemple un avion). Il s'agit d'empêcher au maximum l'aéronef d'atteindre, lorsqu'il est proche du sol, des vitesses verticales telles que l'équipage ne puisse plus, compte tenu des capacités de l'aéronef, redresser la situation. En d'autres termes, dans le mode UPE, il est fait en sorte d'éviter de mettre l'aéronef dans une situation difficilement récupérable par l'équipage et qui peut se terminer en collision avec le sol.

Dans le mode de protection GCoP, qui peut se comprendre comme une extension du mode UPE, il s'agit cette fois de caractériser une situation non opérationnelle et critique pouvant mener à une collision CFIT (sigle de « Controlled Flight Into Terrain », expression anglaise faisant référence à une collision avec le sol ne faisant suite ni à une panne ni à une perte de contrôle de l'aéronef), de façon à appliquer une enveloppe de vol interdite plus restrictive que dans le mode UPE, mais qui permet d'éviter une collision avec le sol, notamment dans le cas d'un terrain plat.

Cette enveloppe, plus restrictive que l'enveloppe du mode UPE peut être qualifiée dans la suite « d'interdite sous conditions ». Cette qualification peut se comprendre du fait que les couples vitesse verticale - altitude de cette enveloppe sont interdits si certaines conditions sont remplies comme il est décrit dans la suite.

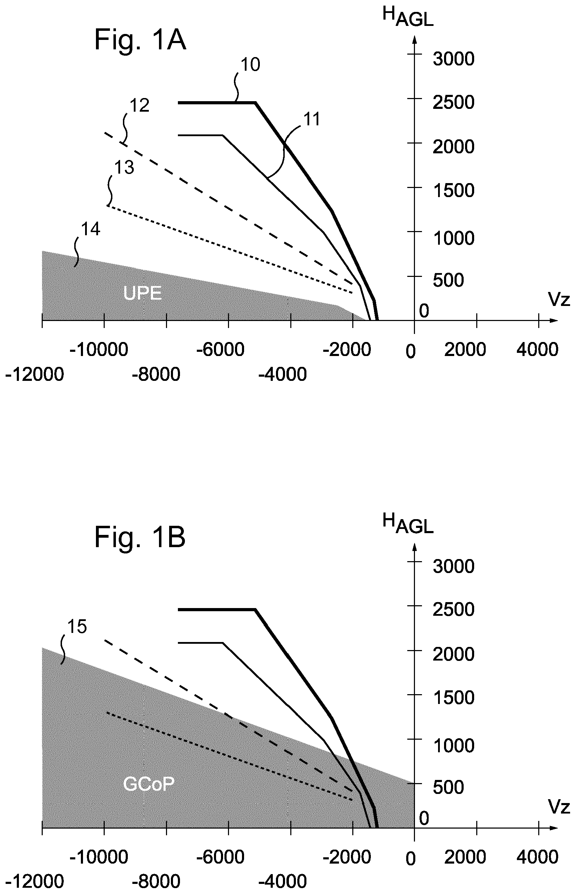

L'enveloppe peut également être qualifiée de « plus restrictive » en ce sens qu'elle peut comporter un nombre de couples vitesse verticale - altitude interdits plus important ou que l'enveloppe comporte des couples interdits pour des altitudes plus élevées. De manière générale, il est possible de considérer que l'enveloppe du mode GCoP englobe l'enveloppe du mode UPE comme cela est illustré par les figures 1A et 1 B évoquées ci-après.

Pour caractériser une situation dangereuse, dans le mode GCoP, il est tout d'abord déterminé si l'aéronef est dans une phase de descente excessive, c'est-à-dire que l'aéronef perd rapidement de l'altitude. Si une telle phase de descente est détectée, plusieurs paramètres, pris isolément ou en combinaison peuvent être surveillés, notamment :

- la position de la manette moteurs sur un cran de pleine poussée,

- un paramètre associé à la manette pour consolider cette position de la manette (par exemple il s'agit de vérifier si les moteurs de l'aéronef ont correctement réagi suite au positionnement de la manette sur le cran),

- l'absence d'une piste à proximité de l'aéronef, et/ou

- l'entrée de l'aéronef dans une zone de vol sensible du plan vitesse verticale - altitude (Vz - $H_{AGL}$) surveillé par le système de détection de proximité de terrain spécifique (ce qui peut permettre de consolider la détection de l'absence de piste).

Les paramètres précités représentent un ensemble de conditions permettant de caractériser une situation de descente non-opérationnelle et dangereuse et de « pré-armer » la détection d'approche anormale du sol (ou d'anomalie d'approche). Il s'agit d'un pré-armement car une condition supplémentaire, décrite dans la suite de la description, peut être vérifiée avant de conclure définitivement à une anomalie d'approche du sol.

Il s'agit de vérifier si, dans la situation courante de l'aéronef, celui-ci est « autorisé » à perdre de l'altitude. Cette autorisation de perte d'altitude est vérifiée dans un profil associé à l'aéronef, appelé dans la suite « profil delta-loss ».

Ainsi, si l'une des conditions portant par exemple sur le cran manette moteurs ou sur l'absence d'une proximité de piste est vérifiée et si la perte d'altitude n'est pas autorisée, l'anomalie d'approche du sol est détectée définitivement et une enveloppe de vol interdite spécifique au mode GCoP est sélectionnée.

Cette situation peut s'interpréter comme un maintien de la poussée maximale des moteurs pendant une certaine durée qui n'est pas compatible avec une approche vers un terrain afin d'y atterrir. Ceci peut donc caractériser une situation non nominale dangereuse où l'activation de la protection GCoP à basse altitude devient légitime et utile.

Une autre situation anormale peut être détectée si l'aéronef s'approche du sol alors qu'il n'y a pas de piste où atterrir.

Une fois l'enveloppe spécifique au mode GCoP sélectionnée, comme dans le mode UPE, il est possible de générer des ordres de protection pour commander des surfaces de commande de l'aéronef qui agissent sur sa vitesse verticale, ces ordres de protection étant tels que, lorsqu'ils sont appliqués à ces surfaces de commande, l'aéronef sort de l'enveloppe de vol interdite.

Les ordres de protection, appliqués tant que les conditions d'armement sont vraies et que le mode GCoP est actif (c'est-à-dire que l'aéronef a un couple vitesse verticale - altitude dans l'enveloppe de vol interdite), les ordres de protection permettent de réduire progressivement le taux de descente de l'aéronef jusqu'à, par exemple, le ramener à une vitesse verticale nulle empêchant ainsi l'aéronef de descendre et donc de rentrer en collision avec le terrain survolé (à condition que le terrain ne présente pas de relief particulier, terrain plat).

Lorsque les conditions ne sont plus rencontrées, le mode GCoP est désactivé et l'équipage retrouve son autorité nominale, c'est-à-dire que ses commandes sont de nouveau prises en compte et non plus les commandes des ordres de protection.

Dans la présente description, les notions « d'armement » et « d'activation » (ou « d'engagement ») du mode GCoP sont distinguées.

Le mode GCoP est dit « armé » dans le cas où, bien que les conditions soient vraies, l'aéronef se trouve hors du domaine de vol interdit. Dans le cas où, les conditions sont toujours vraies et lorsque l'aéronef entre dans l'enveloppe de vol interdite, la protection s'engage et agit alors sur le système des surfaces de commande de l'aéronef pour l'en faire ressortir : on parle alors « d'engagement » (ou « d'activation ») de la protection.

Les modes GCoP et UPE ont des enveloppes de vol respectives. L'enveloppe du mode GCoP est plus restrictive car elle vise à permettre de prendre des mesures correctives avant le déclenchement du mode UPE.

La **figure 1A** illustre une enveloppe de vol interdite pour le mode UPE.

La figure 1 A est un graphique avec en abscisses la vitesse verticale de l'aéronef Vz, comptée positivement vers le ciel, en (pieds par minute ft/min, 1 ft/min = 0,00508 m/s). En ordonnées, le graphique représente l'altitude de l'aéronef $H_{AGL}$, par rapport au sol en pieds (1 pieds = 30,48 cm).

La courbe 10 délimite (vers la partie inférieure du graphique) une zone de couples vitesse verticale - altitude pour lesquelles une alerte, par exemple sonore, est émise vers l'équipage. Cette zone permet d'informer l'équipage qu'un danger imminent soit réellement détecté. La courbe 11 délimite (vers la partie inférieure du graphique) une zone comprise dans la zone précitée. Lorsque la vitesse verticale courante et l'altitude courante de l'aéronef est dans cette zone, cela signifie qu'il devient plus probable (que dans la zone délimitée par la courbe 10) que l'équipage doive intervenir. Afin d'attirer encore plus l'attention de l'équipage, à l'alerte sonore peut par exemple s'ajouter une alerte visuelle.

Les courbes 12 et 13 représentent respectivement la capacité maximale en pilote automatique, autrement dit le facteur de charge maximal autorisé lorsque le pilote automatique est engagé et la capacité maximale en pilotage manuel, autrement dit le facteur de charge maximal autorisé lors du contrôle manuel de l'aéronef sous peine d'endommager la structure de l'aéronef.

La zone 14 représente l'enveloppe de vol interdite. Lorsque l'aéronef se trouve dans cette zone, il est fort probable que l'avion court un risque ou qu'il soit en danger de collision avec le sol. Des ordres de protection peuvent alors être générés et appliqués.

La **figure 1B** illustre l'enveloppe de vol interdite pour le mode GCoP.

La figure 1B est un graphique similaire à celui de la figure 1A. Dans le mode GCoP, l'enveloppe de vol interdite 15 a une surface dans le plan vitesse verticale - altitude plus importante que celle de l'enveloppe du mode UPE illustrée dans la figure 1A. L'enveloppe de la figure 1B est ainsi plus restreinte que celle de la figure 1A en ce sens que les couples vitesse verticale - altitude interdits pour l'aéronef sont plus nombreux.

Le mode GCoP peut constituer une couche de sécurité supplémentaire par rapport au mode UPE. Avec la détection d'anomalies sous conditions évoquée ci-dessus, il est possible de prendre des mesures correctives assez tôt, avant même le déclenchement du mode UPE. En effet, il est probable pour l'aéronef de se trouver dans l'enveloppe GCoP avant de se trouver dans l'enveloppe UPE.

Le mode GCoP génère des ordres de protection sous des conditions plus restrictives que le mode UPE. Toutefois, le mode GCoP a une enveloppe plus large que le mode UPE, ainsi, des ordres de protection peuvent être générés pour des altitudes plus élevées que pour le mode UPE. Cela permet de réaliser une détection d'anomalie accompagnée de prise de mesures correctives selon deux modes coexistant, renforçant ainsi la sécurité de l'aéronef.

Dans la suite de la description, sont décrites plusieurs conditions (et ensembles de conditions) permettant de caractériser une phase de vol de l'aéronef. Ces conditions sont données à titre d'exemples, et ne doivent pas être comprises comme limitatives.

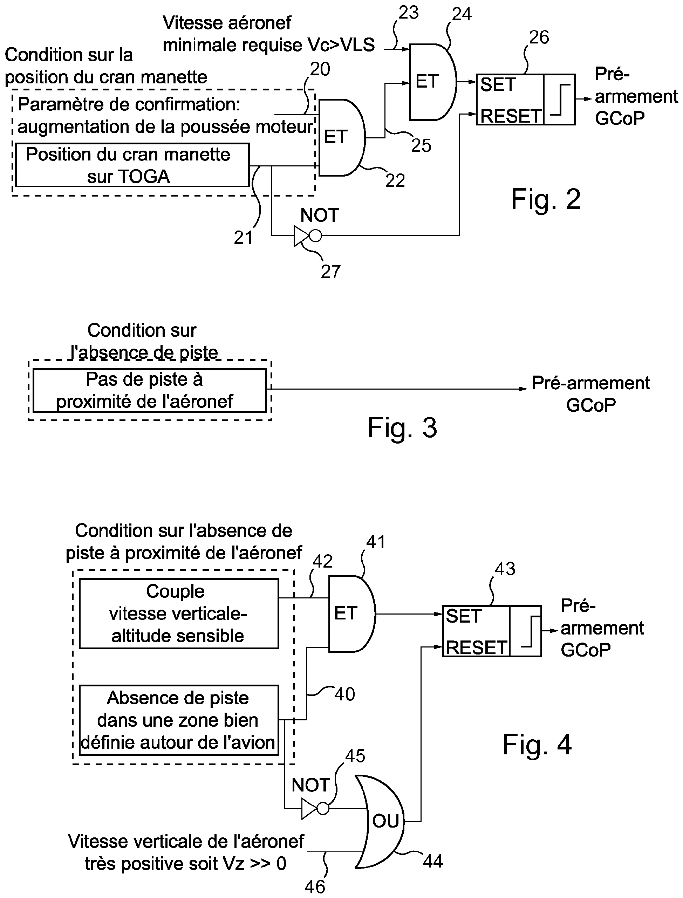

Une première condition peut par exemple porter sur la position d'un organe de commande de l'aéronef comme par exemple la manette de poussée des moteurs. Cette condition est décrite en référence à la **figure 2**.

La condition sur l'organe de commande, comme par exemple la manette de poussée, peut être utilisée pour détecter une anomalie pour le cas où, par exemple, l'équipage de l'aéronef pousse la manette sur le cran TOGA (sigle de « Take-Off Go-Around ») qui correspond à une forte poussée des moteurs utilisée lors du décollage ou dans une phase de remise des gaz, alors que l'aéronef est en phase de descente.

Une telle situation peut présenter un danger et il peut ainsi être utile d'armer la protection du mode GCoP.

Afin de renforcer la détection d'anomalie, il est possible de coupler la détection de la présence de la manette sur le cran TOGA à un mécanisme de vérification de la réponse des moteurs à la manette. Par exemple, il s'agit, une fois la manette positionnée sur le cran TOGA, de surveiller durant un temps prédéterminé, la variation de la vitesse de rotation des moteurs (paramètre N1). Alternativement, ou en combinaison, il est possible de surveiller le paramètre EPR (sigle de « Engine Pressure Ratio »).

Ainsi, sur la figure 2, les signaux 20 et 21 représentant respectivement la présence de la manette sur le cran TOGA et l'augmentation de la vitesse de rotation des moteurs sont donnés en entrée d'une porte logique ET 22.

Afin de renforcer encore la détection d'anomalie, il est possible de comparer la vitesse courante de l'aéronef à plus petite vitesse que l'équipage peut commander de donner à l'aéronef. Cette vitesse est communément désignée par VLS (ou « Lowest Selectable Speed »). En effet, à basse vitesse (c'est-à-dire en dessous de la vitesse VLS), la commande de la poussée maximale des moteurs peut constituer une manoeuvre opérationnelle normale et ne pas correspondre à une anomalie.

Ainsi, un signal 23 représentant le résultat de cette comparaison (1 si la vitesse est supérieure à la vitesse VLS ou 0 sinon), est donné en entrée d'une porte logique ET 24 avec la sortie 25 de la porte 22.

La sortie de la porte logique 24 est donnée à l'entrée SET d'une bascule logique 26.

Ainsi, lorsque les conditions représentées par les signaux 20, 21 et 23 sont vraies, la bascule 26 émet un signal à 1 qui commande le pré-armement de la protection du mode GCoP.

Pour remettre la bascule à zéro, le signal 21, représentant la position de la manette sur le cran TOGA est donnée en entrée à un inverseur 27 dont la sortie est donnée à l'entrée RESET de la bascule.

Ainsi, dans le cas où le cran manette n'est plus sur la position TOGA, le verrouillage n'est plus effectif et la bascule est réinitialisée, ce qui a pour conséquence de désarmer la protection du mode GCoP.

Une deuxième condition peut porter sur l'absence de piste à proximité de l'aéronef, lors d'une phase de descente de celui-ci. Cette condition est illustrée par la **figure 3**.

Il s'agit de pré-armer la protection du mode GCoP lorsque, lors d'une phase de descente, l'aéronef ne perçoit pas de piste dans un périmètre autour de sa position. Cette information peut provenir d'une base de données de pistes, par exemple la base de données du système de navigation (appelé FMS pour « Flight Management System » en anglais, « système de gestion de vol » en français), ou encore la base de données du système de détection de proximité terrain (appelé TAWS pour « Terrain Awareness and Warning System » en anglais, soit « système d'alerte et de prise de conscience du terrain » en français) ou tout autre système à bord de l'aéronef comportant cette information.

Cependant, il peut s'avérer que les bases de données permettant d'obtenir des informations sur les pistes à proximité ne soient pas toujours intègres.

La **figure 4** illustre un ensemble de conditions venant renforcer la détection d'absence de piste.

Un signal 40, représentant l'absence de piste à proximité de l'aéronef lorsque celui-ci est en descente vers le sol est donnée en entrée à une porte logique ET 41 (lorsqu'il n'y a pas de piste à proximité de l'aéronef, le signal 40 est à 1 et il est à 0 sinon).

Par ailleurs, un signal 42, représentant l'entrée de l'aéronef dans une zone de vol sensible du plan vitesse verticale - altitude (Vz - $H_{AGL}$), par exemple l'enveloppe délimitée par la courbe 11 de la figure 1A est également fourni en entrée à la porte logique 41.

La sortie de la porte 41 est donnée à l'entrée SET d'une bascule logique 43 dont la sortie peut permettre de pré-armer la protection du mode GCoP.

Ainsi, lorsque l'aéronef présente un taux de descente excessif (c'est-à-dire la situation selon laquelle l'aéronef présente, lors d'une descente, à une hauteur donnée par rapport au sol, une vitesse verticale qui est trop élevée pour cette hauteur), et qu'il est détecté qu'il ne se trouve pas de piste à proximité de l'aéronef, la protection du mode GCoP est armée.

Pour remettre la bascule à zéro, l'entrée RESET de la bascule est connectée à la sortie d'une porte logique OU 44.

Cette porte 44 reçoit en entrée le signal 40 inversé par un inverseur 45. Ainsi, lorsqu'une piste à proximité de l'aéronef est détectée, le signal 40 passe à 0, puis, par l'effet de l'inverseur, l'entrée RESET de la bascule passe à 1 et la bascule est réinitialisée, c'est-à-dire que sa sortie ne commande plus le pré-armement de la protection.

La porte 44 reçoit par ailleurs un signal 46 qui vaut 1 lorsque la vitesse verticale de l'aéronef redevient positive, c'est-à-dire que l'aéronef sort d'une phase de descente et amorce une remontée.

Le pré-armement de la protection GCoP comme décrit en référence à la figure 4 permet de rendre encore plus fiable le critère d'absence de piste à proximité de l'aéronef.

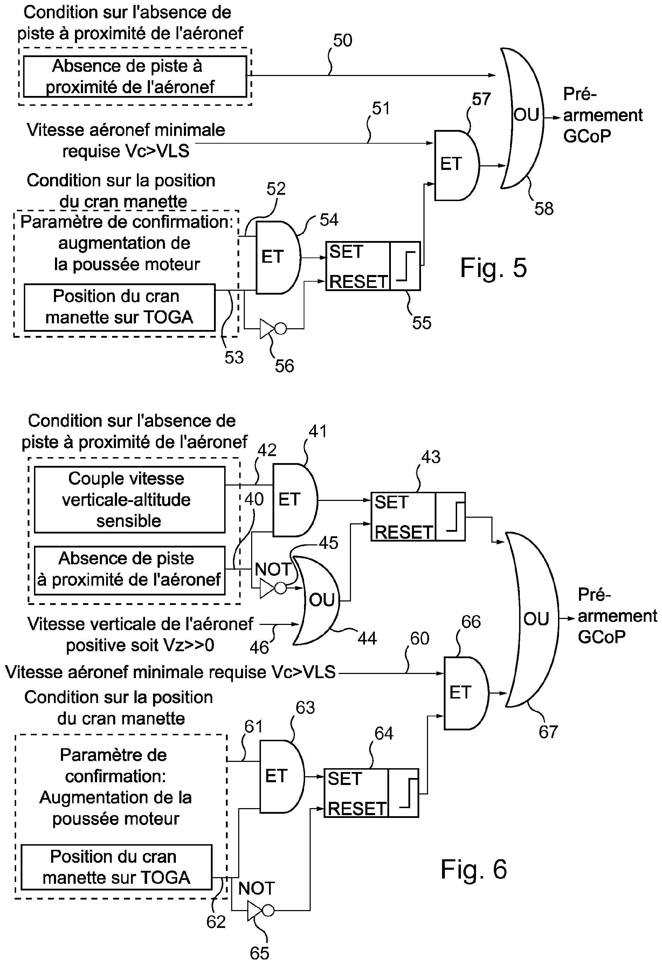

Un autre ensemble de conditions à remplir pour pré-armer la protection du mode GCoP est décrite en référence à la **figure 5**.

Cet ensemble de conditions reprend les conditions sur l'absence de piste à proximité de l'aéronef (signal 50), la vitesse de l'aéronef supérieure à la vitesse minimum VLS qui puisse être commandée par l'équipage (signal 51), la confirmation de l'augmentation de la poussé des moteurs (signal 52) et la position de la manette sur le cran TOGA (signal 53) déjà évoqués ci-avant.

Les signaux 52 et 53 sont donnés en entrée d'une porte logique ET 54 dont la sortie est connectée à l'entrée SET d'une bascule logique 55. L'entrée RESET de la bascule est quant à elle connectée à la sortie d'un inverseur 56 qui reçoit le signal 53.

La sortie de la bascule et le signal 51 sont donnés en entrée à une porte logique ET 57. La sortie de la porte logique 57 et le signal 50 sont donnés en entrée à une porte logique OU 58. La sortie de la porte 58 permet de pré-armer ou non la protection du mode GCoP.

L'ensemble des conditions décrites ci-dessus en référence à la figure 5 peut se concevoir comme la combinaison de celles décrites en référence aux figures 2 et 3.

La **figure 6** illustre un ensemble de conditions pouvant se concevoir comme la combinaison des conditions décrites en référence aux figures 2 et 4.

Les éléments 40 à 46 de la figure 4 sont repris dans la figure 6.

Par ailleurs, les conditions sur la vitesse de l'aéronef supérieure à la vitesse minimum VLS qui puisse être commandée par l'équipage (signal 60), la confirmation de l'augmentation de la poussé des moteurs (signal 61) et la position de la manette sur le cran TOGA (signal 62) déjà évoqués ci-avant sont repris.

Les signaux 61 et 62 représentant respectivement la présence de la manette sur le cran TOGA et l'augmentation de la vitesse de rotation des moteurs sont donnés en entrée d'une porte logique ET 63 dont la sortie est connectée à l'entrée SET d'une bascule logique 64. L'entrée RESET de la bascule est quant à elle connectée à la sortie d'un inverseur 65 qui reçoit le signal 62.

La sortie de la bascule 64 et le signal 60 représentant le résultat de cette comparaison (1 si la vitesse est supérieure à la vitesse VLS ou 0 sinon) sont donnés en entrée à une porte logique ET 66.

La sortie de la porte logique 66 et la sortie de la bascule 43 sont donnés en entrée à une porte logique OU 67. Enfin, la sortie de la porte 67 permet d'armer ou non la protection du mode GCoP.

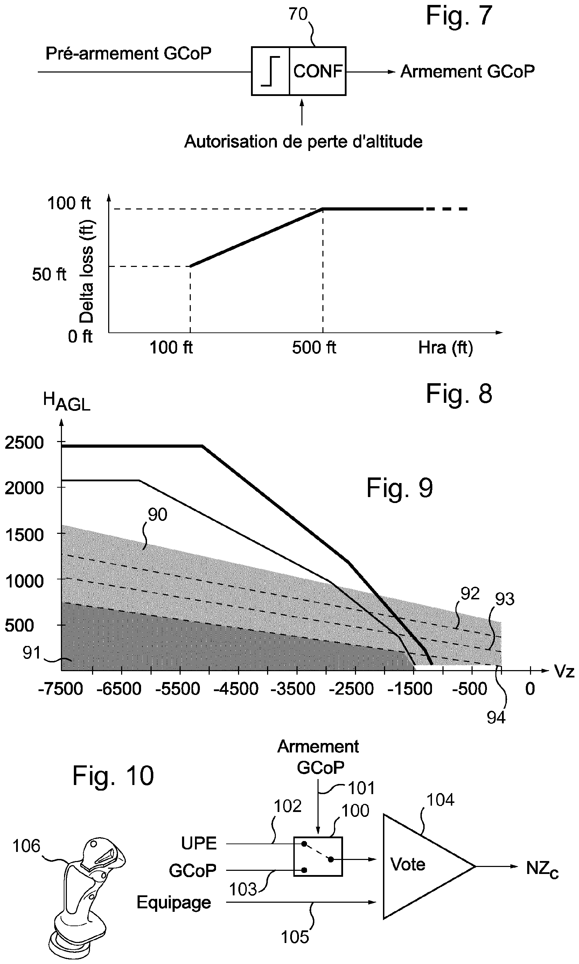

La **figure 7** illustre une condition d'autorisation de perte d'altitude pouvant venir compléter les conditions déjà évoquées ci-avant. En particulier, cette condition peut venir s'insérer une fois le signal de pré-armement généré (en sortie des éléments 26, 43, 58, 67 par exemple), afin d'armer le mode GCoP.

Il s'agit d'un module de confirmation 70 qui reçoit en entrée le signal de pré-armement et qui, en fonction d'une autorisation de perte d'altitude émet un signal d'armement définitif de la protection.

L'autorisation de perte d'altitude peut servir à retarder le déclenchement (ou armement) de la protection, par exemple pour permettre à l'équipage de rétablir la situation de l'aéronef de lui-même (réaliser une manoeuvre d'évitement par le bas ou autre) ou d'effectuer une remise des gaz. L'autorisation de perte d'altitude peut provenir d'un profil de perte d'altitude illustré par la figure 8.

La **figure 8** est un graphique avec en abscisses l'altitude de l'aéronef $H_{RA}$ (en pieds, ft) et en ordonnées la perte d'altitude (« delta Loss ») autorisée pour l'aéronef (en pieds, ft).

Si la vitesse verticale de l'aéronef est négative et que les conditions de pré-armement de la protection sont remplies, il est déterminé l'altitude Hra à partir de laquelle la vitesse verticale de l'aéronef est devenue négative. La perte d'altitude correspondante dans le profil est alors déterminée (par exemple par lecture dans une table stockant ce profil) et si l'aéronef perd plus d'altitude qu'autorisé, la protection est armée (génération des ordres de protection et application de ces ordres).

Ainsi, par exemple, lorsque l'aéronef se trouve à 100 pieds au-dessus du sol et que le signal de pré-armement est actif, il est attendu que l'aéronef perde 50 pieds avant de d'armer la protection. Dans le cas où les conditions de pré-armement sont rencontrées au-dessus de 500 pieds, la perte d'altitude autorisée est de 100 pieds quelle que soit la hauteur Hra. Les valeurs ci-dessus sont données purement à titre d'illustration.

Lors de l'armement de la protection, une enveloppe de vol interdite est déterminée. Celle-ci définit des couples de vitesse verticale (Vz en pieds par minutes) et d'altitude par rapport au sol (Hra en pieds) non autorisés pour l'aéronef. A partir du moment où l'aéronef pénètre dans cette enveloppe de vol « interdite sous conditions », il suit un profil de descente correspondant au profil de ladite enveloppe de vol interdite.

Des ordres de protection sont générés pour commander des surfaces de commande de l'aéronef qui agissent sur sa vitesse verticale, ces ordres de protection étant tels que, lorsqu'ils sont appliqués aux surfaces de commande, l'aéronef évite de se trouver dans l'enveloppe de vol interdite.

Les ordres peuvent être générés à partir de profils de descente comme illustré par la **figure 9**.

La zone 90 représente l'enveloppe de vol interdite dans le mode GCoP, la zone 91 représente l'enveloppe de vol interdite pour le mode UPE, les courbes 92, 93 et 94 représentent des profils de descente qui permettent à l'aéronef de réduire de manière progressive la vitesse verticale (en valeur absolue) lors de la descente.

Les profils respectent la capacité maximale en pilotage manuel, autrement dit, le facteur de charge maximal autorisé lors du contrôle manuel de l'aéronef sous peine d'endommager la structure de l'aéronef. Le profil utilisé dépend du point (Vz, Hra) à partir duquel la protection GCoP est armée.

Concernant l'altitude Hra qui définit les extrémités de l'enveloppe de vol interdite du mode GCoP, l'altitude maximale Hra pour une vitesse verticale nulle est fixée à 500 pieds (comme évoqué précédemment, cette altitude à Vz nulle peut varier en fonction du point Vz/Hra où les conditions d'armement de la protection GCoP sont rencontrées). L'enveloppe de vol interdite occupe alors le domaine Vz/Hra partant du point défini précédemment, à savoir 500 pieds à Vz nulle jusqu'à une altitude de 2000 pieds à une Vz de -12000 pieds/min.

Pour générer un ordre de protection, une valeur d'accélération verticale γ**Z**, est déterminée par la formule suivante :

$$\gamma Z = (Vz^2 - Vmax^2)/2h$$

dans laquelle :

- Vz est ladite vitesse verticale courante mesurée de l'aéronef ;
- Vmax est la vitesse verticale maximale autorisée à la hauteur courante selon l'enveloppe de vol interdite; et
- h est l'altitude courante mesurée.

L'ordre de protection généré correspond alors à une ou plusieurs commandes d'angle de déflexion de surfaces de commande permettant d'arriver à l'accélération verticale ainsi calculée.

Lorsqu'un ordre de protection est généré, il peut ne pas être immédiatement appliqué. Son application peut être soumise à un mécanisme de décision comme décrit dans la suite de la description.

En particulier, il peut être décidé de choisir entre l'application de l'ordre généré et l'application d'un ordre émanant de l'équipage. Une telle sélection est illustrée par la **figure 10**.

Un module de sélection de mode de protection 100 reçoit en entrée un signal de sélection 101, pour sélectionner un mode de protection (UPE ou GCoP). Par exemple, le mode UPE est un mode par défaut, et le signal 101 vient activer le mode GCoP. Le signal 101 est par exemple un signal d'armement comme généré par le module 70 représente sur la figure 7.

Ainsi, selon le mode sélectionné, un ordre généré selon le mode UPE représenté par un signal 102, ou un ordre généré par le mode GCoP, représenté par un signal 103 va être délivré par le module de sélection de protection 100.

Toutefois, avant d'appliquer effectivement l'ordre délivré par le module 100, celui-ci va être soumis à une sélection par un module de vote 104 chargé de choisir entre l'application de l'ordre issu du module 100 ou d'un ordre émanant de l'équipage, représenté par un signal 105. Par exemple, l'ordre provient d'une commande sur la manette des gaz 106.

Pour le cas où l'aéronef se retrouve avec un fort taux de descente verticale à basse altitude et que les conditions de la protection GCoP ne sont pas réunies, le mode GCoP n'est pas actif. Le module de vote reçoit alors deux ordres de protection, l'un étant l'ordre de protection du mode UPE et l'autre étant l'ordre de l'équipage (par exemple suite à une action du pilote sur la manette).

Pour opérer le choix de l'ordre à appliquer, le module de vote peut appliquer des critères de décision comme par exemple l'ordre qui entend faire le plus cabrer l'aéronef. Ainsi, c'est l'ordre qui permet de donner le cabrage le plus important à l'aéronef qui est retenu comme prioritaire par le module de vote et c'est cet ordre qui est appliqué.

Pour le cas où les conditions de la protection GCoP sont rencontrées, le choix de l'ordre à appliquer se fait entre celui de la protection GCoP et celui de l'équipage. Pour choisir, le module de vote peut utiliser le même critère qu'évoqué ci-dessus.

Lorsqu'un ordre de protection est généré, il peut ne pas être appliqué. Son application peut être inhibée par un mécanisme garantissant la manoeuvrabilité de l'aéronef par l'équipage dans des cas particuliers où ce dernier ne doit pas être gêné par des ordres générés automatiquement.

Pour annuler un ordre de protection généré, plusieurs critères peuvent être pris en compte, notamment :

- le paramètre AEI (sigle de « All Engine Inoperative » en anglais) traduisant la perte de l'ensemble des moteurs de l'aéronef,

- le paramètre TEFO (sigle de « Total Engine Flame Out » en anglais) traduisant l'extinction de l'ensemble des moteurs de l'aéronef,

- une incohérence entre les radioaltimètres 1 et 2 de l'aéronef, autrement dit des mesures erronées renvoyées par l'un ou l'autre des instruments de mesure embarqués sur l'aéronef et le renseignant sur son altitude (l'altitude Hra, en pieds),

- la paramètre NCD (sigle de « No Computed Data » en anglais) d'un radioaltimètre, c'est à dire un radioaltimètre opérant en dehors du domaine dans lequel il est censé fonctionner et ne pouvant renseigner l'aéronef sur son altitude actuelle,

- une perte de la loi normale (dans le cas où des systèmes de protection de commande de vol embarqués à bord de l'aéronef sont inopérants),

- la présence d'une piste à proximité de l'aéronef : à partir du moment où une piste se trouve à proximité de l'aéronef, on ne peut empêcher l'aéronef d'atterrir même si la situation est caractérisée comme étant anormale, et

- la perte du système TAWS (sigle de "Terrain Awareness Warning System", en anglais), en particulier lorsque le mode de protection GCoP s'appuie sur ce système.

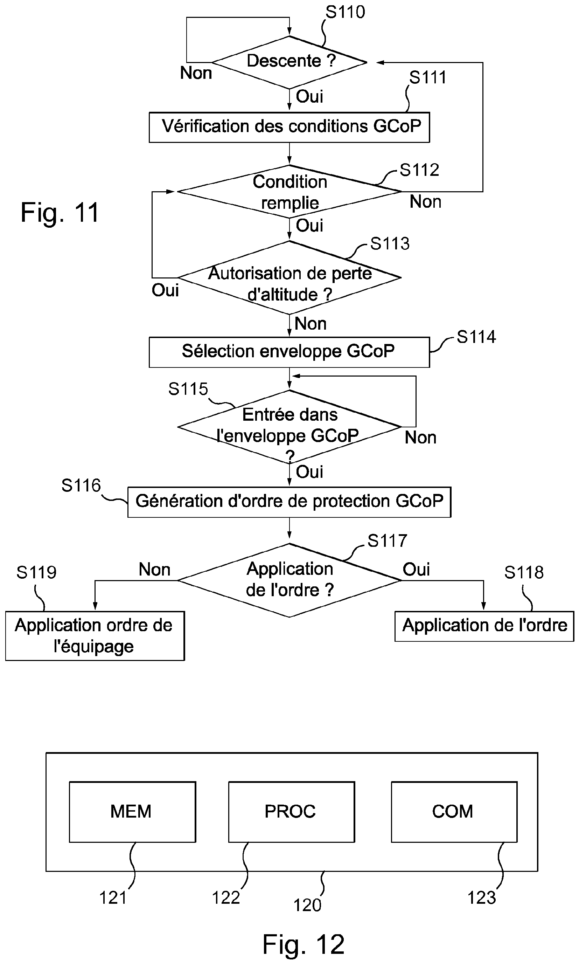

La **figure 11** est un organigramme d'étapes d'un procédé de détection d'anomalie de descente d'un aéronef selon des modes de réalisation. Ce procédé peut par exemple être mis en oeuvre par un système de détection d'anomalie de descente d'un aéronef.

Lors d'une étape S110, il est déterminé si l'aéronef a amorcé une descente. Il peut être utilisé un seuil de vitesse de descente pour cette détermination.

Si l'aéronef est effectivement en descente (OUI), c'est-à-dire qu'il perd de l'altitude par rapport au sol, de manière rapide, une ou plusieurs des conditions déjà décrites ci-avant sont vérifiées ors de l'étape S111.

Il est déterminé lors de l'étape S112 si au moins une des conditions est remplie. Si ce n'est pas le cas (NON), le procédé retourne à l'étape S110.

Sinon, il est déterminé lors de l'étape S113 si l'aéronef est autorisé ou non à perdre de l'altitude, condition supplémentaire déjà évoquée ci-avant.

Si l'aéronef est autorisé à perdre de l'altitude (OUI), le procédé retourne à l'étape S112. Dans l'autre alternative (NON), une enveloppe de vol interdite GCoP est sélectionnée lors de l'étape S114. Par exemple, comme déjà évoqué ci-avant, le mode UPE est actif par défaut. Ainsi, le couple vitesse verticale courante - altitude courante de l'aéronef est déjà surveillé mais par rapport à une enveloppe de vol interdite propre au mode UPE (et de surface plus petite que l'enveloppe du mode GCoP). La sélection de l'enveloppe de vol interdite du mode GCoP peut alors consister à ne plus tenir compte de l'enveloppe du mode UPE et de considérer dorénavant l'enveloppe propre au mode GCoP.

Une fois l'enveloppe sélectionnée, il est déterminé si l'aéronef est entré dans l'enveloppe en question. En fait il est vérifié si le couple vitesse verticale - altitude courant de l'aéronef appartient à l'enveloppe.

Si ce n'est pas le cas (NON), le procédé continue à comparer le couple courant à l'enveloppe, sinon (OUI), un ordre de protection est généré lors de l'étape S116. Comme déjà évoqué ci-avant, cet ordre de protection peut comporter la mise en oeuvre de commande sur des surfaces de commande de l'aéronef lui permettant de reprendre de l'altitude ou de ralentir la vitesse verticale de descente.

Ensuite, lors de l'étape S117, il est déterminé si l'ordre généré doit être appliqué. Par exemple, il s'agit de choisir entre cet ordre généré et un ordre émanant de l'équipage. Ce mécanisme a déjà été évoqué ci-avant.

S'il est décidé d'appliquer l'ordre généré (OUI), celui-ci est appliqué lors de l'étape S118, sinon (NON) l'ordre de l'équipage est appliqué lors de l'étape S119.

Un programme d'ordinateur pour la mise en oeuvre d'un procédé selon un mode de réalisation de l'invention peut être réalisé par la personne du métier à la lecture de l'organigramme de la figure 11 et de la présente description détaillée.

La **figure 12** illustre un système de détection d'anomalie de descente d'un aéronef des modes de réalisation. Le système 120 comporte une unité de mémoire 121 (MEM). Cette unité de mémoire comporte une mémoire vive pour stocker de manière non durable des données de calcul utilisées lors de la mise en oeuvre d'un procédé selon un mode de réalisation. L'unité de mémoire comporte par ailleurs une mémoire non volatile (par exemple du type EEPROM) pour stocker par exemple un programme d'ordinateur selon un mode de réalisation pour son exécution par un processeur (non représenté) d'une unité de traitement 122 (PROC) du système. La mémoire peut également stocker une ou plusieurs enveloppes de vol interdites, des profils d'autorisation de perte d'altitude, des cartes de pistes d'atterrissage, des conditions à vérifier ou autre, selon les modes de réalisation.

Le système comporte par ailleurs une unité de communication 123 (COM) pour mettre en oeuvre des communications, par exemple pour communiquer avec des bases de données de localisation de pistes d'atterrissage ou autre.

**Revendications**

1. Procédé de détection d'anomalie de descente d'un aéronef, comportant les étapes suivantes de :

   - caractérisation (S110, S111, S112, S113) d'une phase de vol de l'aéronef,
   - détermination (S114) d'une enveloppe de vol interdite, définissant un ensemble de vitesses verticales de l'aéronef interdites pour des altitudes données, en fonction de la phase de vol de l'aéronef caractérisée, et
   - détection (S115) d'une anomalie de descente de l'aéronef en fonction d'une vitesse verticale et d'une altitude courantes de l'aéronef, par rapport à l'enveloppe de vol interdite déterminée,

   le procédé étant **caractérisé en ce que** ladite caractérisation comporte au moins l'une d'une détection d'une position d'une manette de commande de poussée de l'aéronef, d'une détermination de la variation d'un paramètre de poussée de l'aéronef, d'une comparaison de la vitesse courante de l'aéronef à un seuil minimal de commande de vitesse, et d'une détection d'une absence de piste d'atterrissage à proximité de l'aéronef.

2. Procédé selon la revendication 1, dans lequel la détection de l'anomalie concerne une approche du sol ou de la mer par l'aéronef et est conditionnée par une autorisation de diminution d'altitude de l'aéronef.

3. Procédé selon l'une des revendications précédentes, dans lequel l'enveloppe de vol interdite déterminée correspond à une enveloppe dont la surface dans le plan vitesse verticale - altitude de l'aéronef est plus large que celle d'une enveloppe de vol interdite nominale.

4. Procédé selon l'une des revendications précédentes, comportant en outre, si une anomalie est détectée, une étape de génération d'un ordre de protection de l'aéronef (S116), pour répondre à l'anomalie détectée.

5. Procédé selon la revendication 4, comportant en outre une étape d'application de l'ordre de protection généré.

6. Procédé selon l'une des revendications 4 et 5, dans lequel l'ordre de protection s'applique sur des surfaces de commande de l'aéronef.

7. Procédé selon l'une des revendications 4 à 6, comportant en outre une étape de décision (S117) d'application de l'ordre de protection généré.

8. Procédé selon la revendication 7, dans lequel l'étape de décision comporte la sélection d'un ordre parmi au moins l'ordre de protection généré et un ordre de pilotage émanant d'un organe de pilotage de l'aéronef.

9. Procédé selon l'une des revendications 4 à 8, comportant en outre une étape d'inhibition d'application de l'ordre généré en fonction de la phase de vol de l'aéronef déterminée.

10. Système de détection d'anomalie de descente d'un aéronef, comportant une unité de traitement configurée pour caractériser une phase de vol de l'aéronef, l'unité de traitement étant en outre configurée pour déterminer une enveloppe de vol interdite, définissant un ensemble de vitesses verticales de l'aéronef interdites pour des altitudes données, en fonction de la phase de vol de l'aéronef caractérisée, et détecter une anomalie de descente de l'aéronef en fonction d'une vitesse verticale et d'une altitude courantes de l'aéronef, par rapport à l'enveloppe de vol interdite déterminée, le système étant **caractérisé en ce que** ladite caractérisation comporte au moins l'une d'une détection d'une position d'une manette de commande de poussée de l'aéronef, d'une détermination de la variation d'un paramètre de poussée de l'aéronef, d'une comparaison de la vitesse courante de l'aéronef à un seuil minimal de commande de vitesse, et d'une détection d'une absence de piste d'atterrissage à proximité de l'aéronef.

11. Aéronef comportant un système selon la revendication 10.

**Patentansprüche**

1. Verfahren zur Erfassung einer Sinkflug-Anomalie eines Luftfahrzeugs, das die folgenden Schritte aufweist:

    - Bestimmung (S110, S111, S112, S113) einer Flugphase des Luftfahrzeugs,
    - Ermittlung (S114) einer verbotenen Flugenveloppe, die eine Gruppe von vertikalen Geschwindigkeiten des Luftfahrzeugs definiert, die für gegebene Flughöhen verboten sind, abhängig von der bestimmten Flugphase des Luftfahrzeugs, und
    - Erfassung (S115) einer Sinkflug-Anomalie des Luftfahrzeugs abhängig von einer aktuellen vertikalen Geschwindigkeit und Flughöhe des Luftfahrzeugs, bezüglich der ermittelten verbotenen Flugenveloppe,

    wobei das Verfahren **dadurch gekennzeichnet ist, dass** die Bestimmung mindestens eine von einer Erfassung einer Stellung eines Schubsteuerhebels des Luftfahrzeugs, einer Ermittlung der Änderung eines Schubparameters des Luftfahrzeugs, einem Vergleich der aktuellen Geschwindigkeit des Luftfahrzeugs mit einer minimalen Geschwindigkeitssteuerschwelle und einer Erfassung einer Abwesenheit einer Landebahn in der Nähe des Luftfahrzeugs aufweist.

2. Verfahren nach Anspruch 1, wobei die Erfassung der Anomalie eine Annäherung an den Boden oder das Meer durch das Luftfahrzeug betrifft und durch eine Genehmigung der Verringerung der Flughöhe des Luftfahrzeugs bedingt wird.

3. Verfahren nach einem der vorhergehenden Ansprüche, wobei die ermittelte verbotene Flugenveloppe einer Enveloppe entspricht, deren Fläche in der Ebene vertikale Geschwindigkeit - Flughöhe des Luftfahrzeugs breiter ist als diejenige einer verbotenen Nenn-Flugenveloppe.

4. Verfahren nach einem der vorhergehenden Ansprüche, das außerdem, wenn eine Anomalie erfasst wird, einen Schritt der Erzeugung eines Schutzbefehls des Luftfahrzeugs (S116) aufweist, um auf die erfasste Anomalie zu reagieren.

5. Verfahren nach Anspruch 4, das außerdem einen Schritt der Anwendung des erzeugten Schutzbefehls aufweist.

6. Verfahren nach einem der Ansprüche 4 und 5, wobei der Schutzbefehl an Steuerflächen des Luftfahrzeugs angewendet wird.

7. Verfahren nach einem der Ansprüche 4 bis 6, das außerdem einen Schritt der Entscheidung (S117) der Anwendung des erzeugten Schutzbefehls aufweist.

8. Verfahren nach Anspruch 7, wobei der Entscheidungsschritt die Auswahl eines Befehls unter mindestens dem erzeugten Schutzbefehl und einem Steuerbefehl aufweist, der von einem Steuerorgan des Luftfahrzeugs stammt.

9. Verfahren nach einem der Ansprüche 4 bis 8, das außerdem einen Schritt des Verhinderns der Anwendung des erzeugten Befehls abhängig von der ermittelten Flugphase des Luftfahrzeugs aufweist.

10. System zur Erfassung einer Sinkflug-Anomalie eines Luftfahrzeugs, das eine Verarbeitungseinheit aufweist, die konfiguriert ist, eine Flugphase des Luftfahrzeugs zu bestimmen, wobei die Verarbeitungseinheit außerdem konfiguriert ist, eine verbotene Flugenveloppe zu ermitteln, die eine Gruppe von vertikalen Geschwindigkeiten des Luftfahrzeugs definiert, die für gegebene Flughöhen verboten sind, abhängig von der bestimmten Flugphase des Luftfahrzeugs, und eine Sinkflug-Anomalie des Luftfahrzeugs abhängig von einer aktuellen vertikalen Geschwindigkeit und Flughöhe des Luftfahrzeugs bezüglich der ermittelten verbotenen Flugenveloppe zu erfassen, wobei das System **dadurch gekennzeichnet ist, dass** die Bestimmung mindestens eine von einer Erfassung einer Stellung eines Schubsteuerhebels des Luftfahrzeugs, einer Ermittlung der Änderung eines Schubparameters des Luftfahrzeugs, einem Vergleich der aktuellen Geschwindigkeit des Luftfahrzeugs mit einer minimalen Geschwindigkeitssteuerschwelle und einer Erfassung einer Abwesenheit einer Landebahn in der Nähe des Luftfahrzeugs aufweist.

11. Luftfahrzeug, das ein System nach Anspruch 10 aufweist.

**Claims**

1. Method for the detection of aircraft descent anomaly, comprising the following steps of:

    - characterizing (S110, S111, S112, S113) a flight phase of the aircraft,
    - determining (S114) a prohibited flight envelope, defining a set of prohibited vertical speeds of the aircraft for given altitudes, as a function of the flight phase of the aircraft characterised, and
    - detecting (S115) a descent anomaly of the aircraft as a function of a current vertical speed and altitude of the aircraft, in relation to the prohibited flight envelope determined,

    the method being **characterized in that** said characterization comprises at least one of detecting a position of a throttle lever of the aircraft, determining the variation of a thrust parameter of the aircraft, comparing the current speed of the aircraft with a minimum speed control threshold, and detecting the absence of a landing runway near the aircraft.

2. Method according to claim 1, in which the detecting of the descent anomaly concerns an approach towards the earth or the sea by the aircraft and is dependent on an authorisation to reduce the altitude of the aircraft.

3. Method according to any one of the preceding claims, in which the prohibited flight envelope determined corresponds to an envelope the area of which in terms of aircraft vertical speed - altitude is larger than that of a nominal prohibited flight envelope.

4. Method according to any one of the preceding claims, also comprising, if an anomaly is detected, a step of generating an aircraft protection order (S116) in response to the anomaly detected.

5. Method according to claim 4, further comprising a step of applying the protection order generated.

6. Method according to either of claims 4 or 5, in which the protection order is applied to control surfaces of the aircraft.

7. Method according to any one of claims 4 to 6, further comprising a decision-making step (S117) for the application of the protection order generated.

8. Method according to claim 7, in which the decision-making step comprises the selection of an order from at least the protection order generated and an attitude control order issued by an attitude control component of the aircraft.

9. Method according to any one of claims 4 to 8, further comprising a step of inhibiting the application of the order generated as a function of the flight phase of the aircraft determined.

10. System for the detection of an aircraft descent anomaly, comprising a processing unit configured to characterise a flight phase of the aircraft, the processing unit also being configured to determine a prohibited flight envelope, defining a set of prohibited vertical speeds of the aircraft for given altitudes, as a function of the flight phase of the aircraft characterized, and detecting a descent anomaly of the aircraft as a function of a current vertical speed and altitude of the aircraft, in relation to the prohibited flight envelope determined, the system being **characterised in that** said characterisation comprises at least one of detecting a position of a throttle lever of the aircraft, determining the variation of a thrust parameter of the aircraft, comparing the current speed of the aircraft with a minimum speed control threshold, and detecting the absence of a landing runway near the aircraft.

11. Aircraft comprising a system according to claim 10.

Fig. 1A

$^H$AGL

10

12

11

13

14

3000

2500

2000

1500

1000

500

UPE

0

Vz

-12000   -10000   -8000   -6000   -4000   -2000   0   2000   4000

Fig. 1B

$^H$AGL

15

3000

2500

2000

1500

1000

500

GCoP

0

Vz

-12000   -10000   -8000   -6000   -4000   -2000   0   2000   4000

Fig. 2

Fig. 3

Fig. 4

Condition sur l'absence de
piste à proximité de l'aéronef

50

Absence de piste à
proximité de l'aéronef

Vitesse aéronef minimale
requise Vc>VLS

51

57

OU

Pré-
armement
GCoP

ET

Condition sur la position
du cran manette

52

54

Paramètre de confirmation:
augmentation de
la poussée moteur

ET

SET
RESET

58

Position du cran
manette sur TOGA

53

56

55

Fig. 5

Condition sur l'absence de
piste à proximité de l'aéronef

42    41

43

Couple vitesse
verticale-altitude
sensible

40    ET

SET
RESET

Absence de piste
à proximité de l'aéronef

45

NOT

OU

Pré-
armement
GCoP

Vitesse verticale de l'aéronef
positive soit Vz>>0

46    44

60    66

OU

Vitesse aéronef minimale requise Vc>VLS

Condition sur la position
du cran manette

61    63

ET

67

Paramètre de
confirmation:
Augmentation de la
poussée moteur

ET

SET
RESET

64

Position du cran
manette sur TOGA

62    65

NOT

Fig. 6

14

Fig. 7

70

Pré-armement GCoP ──────────────┤ ⌐⌐ │CONF├──────► Armement GCoP

↑

Autorisation de perte d'altitude

Fig. 8

100 ft ┄┄┄┄┄┄┄┄┄┄┄┄┄┄┄┄┄┄┄┄┄┄┄┄┄┄┄

50 ft

0 ft

Delta loss (ft)

100 ft          500 ft          Hra (ft)

Fig. 9

$H_{AGL}$

2500

2000

1500

1000

500

90

91

92   93

-7500  -6500  -5500  -4500  -3500  -2500  -1500  -500  0 ──► Vz

94

Fig. 10

Armement
GCoP

101

102          100

UPE ──────●   ╲
              ●──────►  │Vote│ ──────► $NZ_C$
GCoP ─────●               104

103

Equipage ────────────────────►

106

105

Fig. 11

S110

Descente ?

Non

Oui

S111

Vérification des conditions GCoP

S112

Condition remplie

Non

Oui

S113

Autorisation de perte d'altitude ?

Oui

Non

Sélection enveloppe GCoP — S114

S115

Entrée dans l'enveloppe GCoP ?

Non

Oui

S116 — Génération d'ordre de protection GCoP

S117

Application de l'ordre ?

Non

Oui

S119

Application ordre de l'équipage

S118

Application de l'ordre

MEM | PROC | COM

121 | 122 | 120 | 123

Fig. 12

**RÉFÉRENCES CITÉES DANS LA DESCRIPTION**

**Documents brevets cités dans la description**

- FR 2416837
- FR 2956512